# EUROPEAN PATENT APPLICATION

(11) **EP 0 759 653 A2**
(43) Date of publication of application: **26.02.1997**
(21) Application number: 96113110.9
(22) Date of filing: 14.08.1996
(51) Int. Cl.: H02M 3/156

(54) **Dual mode DC-DC converter and method**

(30) Priority: 17.08.1995 US 516325
(71) Applicant: HARRIS CORPORATION, Melbourne, Florida 32919 (US)
(72) Inventor: Walters, Michael M., Raleigh, North Carolina 27606 (US)
(74) Representative: Liesegang, Roland, Dr.-Ing.

(57) **Abstract**

A single DC-DC converter and method for battery powered operation utilizing hysteretic mode voltage regulation for light loads and current mode voltage regulation for heavy loads, with an adjustable lower current limit and automatic transition between modes.

## Description

The present invention relates to a DC-DC converter for battery powered operation and more specifically to a converter and method of managing the power. applied to an electronic device from a battery.

Special power conservation methods have long been used in regulating the power supplied to portable electronic devices such as laptop computers as a function of their activity. Generally, a DC-DC converter connects a direct current source through an averaging filter to the load. The load voltage is regulated to a preset value by controlling the length of time that the converter supplies current to the filter.

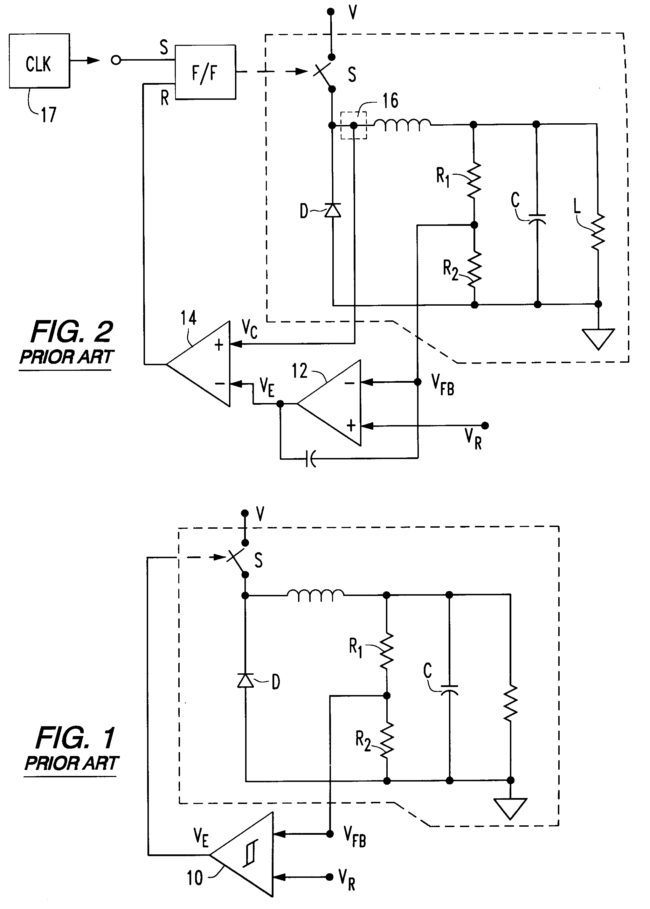

The "bang-bang" technique for controlling the operation of the DC-DC converter is well known. In prior art Figure 1, the supply of current from the voltage source V to the averaging filter L and C to the load L is either fully off or fully on as a function of the position of the switch S. In this control technique, a voltage V_{FB} representative of the voltage across the load L is sensed by the voltage divider comprising resistors R1 and R2 and is compared with a reference voltage V_{R} in a comparator 10, the binary output signal from which controls the operation of the switch S. Because of the hysteresis in the comparator 10, this technique results in overshooting or "hunting." Bang-bang control is very efficient at light loads but results in high voltage ripple unacceptable to sensitive loads.

It is also known that high speed, high performance loop response may be achieved with current mode control in which the source of current supplied is regulated and controlled by pulse width modulation ("PWM") or pulse frequency modulation ("PFM"). In these current mode techniques, the operation of a switch controls the passage of energy to the load. The length of time that the switch is closed is determined by modulation of either the width of the energy pulses passed to the averaging filter and load, (with pulse amplitude and frequency constant), or the frequency of the energy pulses (with pulse amplitude and width constant). Such current mode techniques are efficient for heavy and highly dynamic loads, but the efficiency decrease with the load.

The known current mode control circuit illustrated in Figure 2 where like elements have been given like designations to facilitate the comparison of the figures, the voltage across the load V_{FB} is sensed by the voltage divider R1, R2 and is compared in an operational amplifier 12 with the reference voltage V_{R}. The output signal from the amplifier 12 is applied as an error signal V_{E} to a comparator 14 to which a voltage V_{C} representative of the current through the inductor is also applied. The voltage V_{C} is generated by a suitable conventional current to voltage converter illustrated schematically as a sensor 16. The output signal from the comparator 14 is used to reset a flip-flop or bistable circuit F/F which controls the operation of the switch S, the flip-flop being set by a fixed frequency clock 17 for pulse width modulation, i.e., the pulses are initiated at a fixed frequency but terminated a variable time thereafter.

It is also known to switch between bang-bang and current mode control as a function of the load in an attempt to take advantage of the higher efficiency and dynamic response characteristics of both control methods. In such a circuit, the DC-DC converter uses PFM control for heavy loads. At light loads, the converter supplies a fixed minimum of current to the load. This will build up a charge on the output capacitor C and cause the voltage to increase. A second control loop monitors the output voltage to switch to the bang-bang mode.

While the amplitude and width of the pulses remain a constant, the PFM technique results in a variable switching frequency which cannot be synchronized with a fixed external clock. In addition, such technique generates noise at the harmonics of the switching frequency which is difficult to filter.

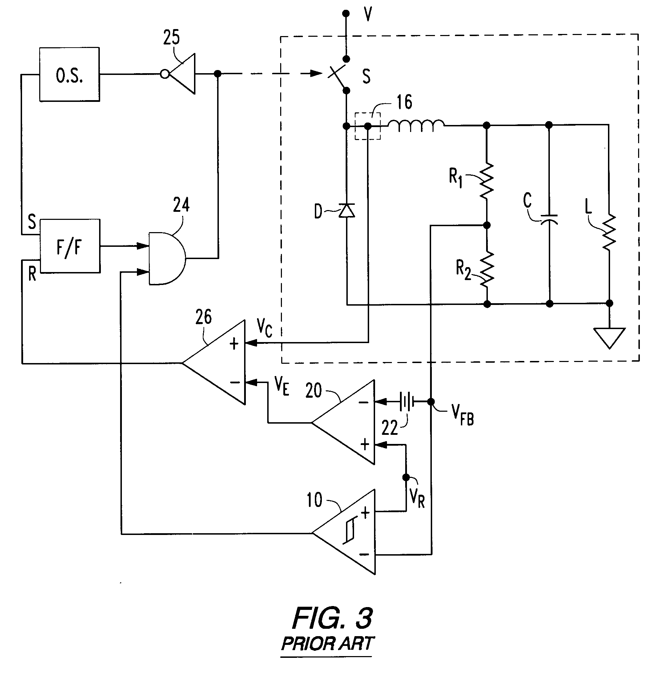

With reference to the prior art circuit illustrated in Figure 3, the feedback voltage V_{FB} is applied to both a voltage comparator 10 such as shown in Figure 1 and to a fixed gain error amplifier 20. The same reference voltage V_{R} is applied to both the comparator 10 and amplifier 20.

The binary output signal from the comparator 10 is applied to one input terminal of an AND gate 24. The output signal from the amplifier 20 is applied to a comparator 26 to which V_{C} from sensor 16 is also applied. The output signal from the current comparator 26 is applied to the reset input terminal of a flip-flop F/F which is connected to the other input terminal of the AND gate 24.

The output signal from the AND gate 24 is used to control the operation of the switch S and is also fed back through an inverter 28 to trigger a monostable multivibrator or one-shot O.S. with is complementary output terminal connected to the set input terminal of the flip-flop F/F.

In operation, a feedback voltage V_{FB} from the capacitor C lower than the reference voltage V_{R} indicates a need for current and causes the comparator 10 to enable the AND gate 24 and thus place the switch S under the control of the flip-flop until the feedback voltage again exceeds the reference voltage indicating a light load and a reduced demand for current.

Thus in normal operation at heavy loads the AND gate 24 is enabled from the comparator 10, with the opening of the switch S for a finite period of time determined by the width of the monostable O.S. pulse and the period of switch closure (and thus the frequency of switch operation) determined by the binary output signal from the comparator 26.

The resetting of the flip-flop is under the control of the comparator 26 which compares V_{C} with V_{E}, the variable output signal from the error amplifier 20 which compares the feedback voltage to the reference voltage.

At light loads, a minimum pulse width closure of the switch S (due to voltage offsets and timing delays in the control) causes a minimum current to develop which exceeds the load current. Accordingly, the voltage across the capacitor C rises and trips the comparator 10 indicating that little current is needed. The tripping of the comparator 10 removes the enabling signal from the AND gate 24 and opens the switch S until the voltage V_{FB} decreases to the hysteresis point of the comparator 10, when the enabling signal from the comparator 10 is again applied to the AND gate 24 to again close the switch S.

The present invention includes a dual mode DC-DC converter for supplying current to a capacitor comprising means for operation in a pulse width modulation mode and for operation in a hysteretic mode responsively to the charge on the capacitor and the current being applied to the capacitor, preferably including means for limiting the peak current applied to the capacitor.

The invention also includes a method of regulating the current supplied to a capacitor comprising the steps of:
(a) sensing the charge on a capacitor to which current is to be supplied;
(b) sensing the current being applied to the capacitor;
(c) applying constant frequency current pulses to the capacitor in a first range of sensed capacitor charge; and
(d) applying constant frequency current pulses to the capacitor in a second range of sensed capacitor charge.

In one aspect, the present invention controls the supply of current as a function of the error voltage V_{E}. The charge stored in the capacitor C is reflected in the voltage across the capacitor. Where the load is light, the current through the inductor to the capacitor will exceed that drawn therefrom by the load, and the charge accumulates in the output capacitor increasing the voltage thereacross. When the load is heavy, greater current will be drawn from the output capacitor than is being supplied through the switch and inductor, and this reduces the voltage of the output capacitor. Thus the voltage across the output capacitor is inversely related to the requirements of the load and directly related to the current though the inductor. This comparison may be used to control the operation of the switch in increasing or decreasing the charge supplied to the capacitor.

In another aspect, the DC-DC converter of the present invention maintains the power stage as a current mode regulator during the dual mode operation, and thus controls the amount of current being supplied in both modes. This is advantageous in that voltage overshoot is avoided and the control transitions smoothly between modes.

Advantageously, the present invention uses a selectively variable lower limit to allow the user to select the load current below which the ripple voltage increases. In this way, the circuit can be better tailored to microprocessor load characteristics.

An object of the present invention is to provide a DC-DC controller and method in which the switching between control modes is automatically and smoothly effected.

Another object is to provide a DC-DC controller and method in which the lower threshold is user adjustable, and the fixed frequency, current mode control is used for high current loads and hysteretic control for light loads.

The invention will now be described, by way of example with reference to the accompanying drawings in which;
Figure is schematic block diagram of a known signal mode hysteretic mode or bang-bang controller.
Figure 2 is schematic block diagram of one embodiment of a known single current mode controller.
Figure 3 is a schematic block diagram of one embodiment of a known dual mode controller.
Figure 4 is a schematic block diagram of one embodiment of the controller of the present inventions.

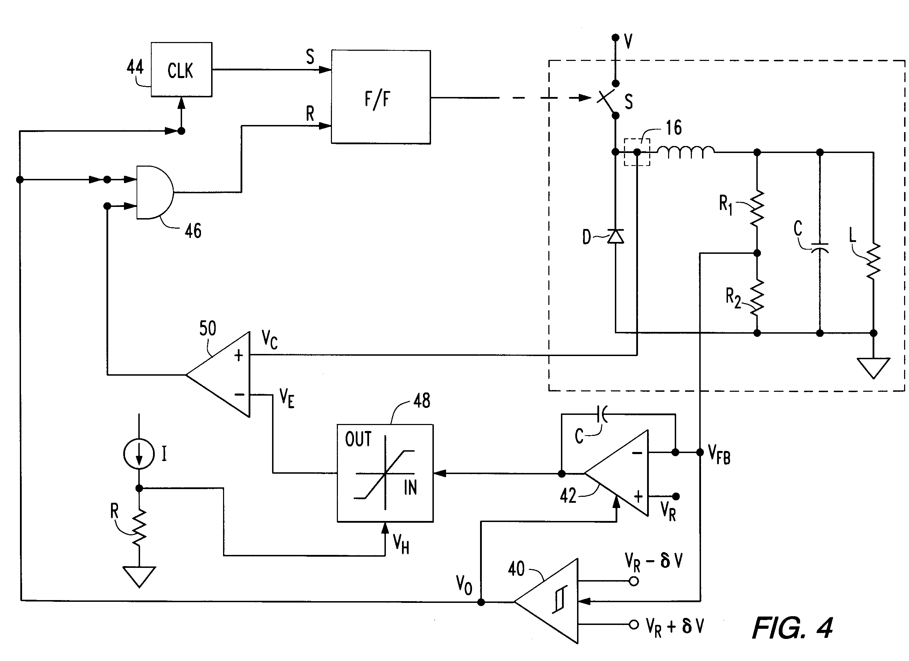

Referring to the DC-DC regulator of Figure 4 where like elements have been accorded like designations to facilitate an understanding of the present invention.

The feedback voltage V_{FB} is applied to a conventional differential amplifier 40 operating as a hysteretic comparator. At high load currents and normal output voltage (i.e. , between V_{R} +δV and V_{R} - δV), the bistable output voltage V_{O} of the amplifier 40 is at a high signal level and is used to enable the clock 44, and the AND gate 46 and the comparator 40 so that the circuit operates in the normal current mode control.

The feedback voltage V_{FB} is also compared with a reference voltage V_{R} to provide the unclamped error voltage which is applied to the limit circuit 48. This voltage is compared in a comparator 50, the binary output signal from which enables the AND gate 46.

The flip-flop which controls the switch S is set by a fixed frequency clock signal and reset by the signal from the AND gate 46. Thus the circuit operates at a constant frequency PWM mode. Because of the constant frequency, the load voltage ripple is much easier to filter.

However, as the current through the load L decreases, the error voltage V_{E} and the inductor current reflected by V_{C} decrease correspondingly. The error voltage V_{E} remains proportional to the load current until it falls below the lower limit V_{H} of the limit circuit 48. Below this level, the error voltage V_{E} becomes a constant, V_{H}, and the converter operates in the hysteretic mode.

A current source I and a limit setting resistor R are used to provide a voltage V_{H}, which represents the minimum controlled current through the inductor. This control voltage V_{H} is applied as the lower limit of the limit circuit 48 and thus establishes the lower limit of the error voltage V_{E} from the limit circuit 48. Under light load conditions, V_{H} is proportional to the voltage from the current sensor 16.

Adjustment of the value of the resistor R determines the value of the hysteretic voltage V_{H}. The value of the resister R will normally be set by the user to fulfil efficiency requirements and expected load characteristics.

In the hysteretic mode of operation, the error voltage V_{E} clamped to V_{H}, the current provided by the converter is greater than the load current. This increase in the charge on the capacitor C and causes the feedback voltage V_{FB} to increase. The converter current is regulated by peak current control and monitored by the sensor 16.

The feedback voltage V_{FB} is monitored by the amplifier 40 and when it raises a predetermined amount δV above the reference voltage V_{R}, the bistable output voltage of the comparator 40 transitions to the low signal level to shut off the clock, the AND gate 46 and the error amplifier 42.

Once the switch S has been opened, the capacitor C supplies the current to the load L and the feedback voltage V_{FB} decreases. Once V_{FB} reaches the predetermined voltage δV below the reference voltage V_{R}, the comparator 40 again transitions to the high signal level to enable the AND gate 46, clock 44 and error amplifier 42. The inductor current is again regulated to continue the hysteretic cycle.

Because the inductor current is regulated in both the peak current and hysteretic modes, the transition between the two modes is very smooth.

Because the current applied to the capacitor is a constant frequency PWM current, the synchronous noise may easily be filtered.

The availability of a controllable current in both modes of a dual current mode control and hystertic mode control for a battery powered DC-DC converter offers several advantages. With high load current, current pulses are supplied at a fixed frequency so that noise may easily be filtered by a suitable convectional filter (not shown). The loop characteristics remain constant over the load range without regard to the mode in which operated. This constant loop characteristic simplifies stability issues and compensation requirements and provides fast response time for dynamic loads.

The clamping of the error signal insures that a minimum level of current is supplied in the hysteretic mode, and limits the peak current avoiding excessive energy build-up in the inductor and load voltage overshoot. In addition, clamping eliminates the variability of the set point due to parasitic voltage offsets and timing errors.

The adjustability of the level at which the error signal is clamped is a significant advantage in that the high ripple voltage characteristic of the hysteretic mode can be selected by the user to a current level that is acceptable to the load equipment.

A single DC-DC converter and method for battery powered operation utilizing hysteretic mode voltage regulation for light loads and current mode voltage regulation for heavy loads, with an adjustable lower current limit and automatic transition between modes.

## Claims

1. A dual mode DC-DC converter for supplying current to a capacitor comprising means for operation in a pulse width modulation mode and for operating in a hysteretic mode responsively to the charge on the capacitor and the current being applied to the capacitor, preferably including means for limiting the peak current applied to the capacitor.

2. A converter as claimed in claim 1 including means for selectively adjusting the peak current applied to the capacitor.

3. A converter as claimed in one of claims 1 or 2 including means for insuring the application of a predetermined minimum current to the capacitor, preferably in the hysteretic mode.

4. A converter as claimed in claim 3 including means for selectively adjusting the minimum current applied to the capacitor.

5. A method of regulating the current supplied to a capacitor comprising the steps of:
(a) sensing the charge on a capacitor to which current is to be supplied;
(b) sensing the current being applied to the capacitor;
(c) applying constant frequency current pulses to the capacitor in a first range of sensed capacitor charge; and
(d) applying constant frequency current pulses to the capacitor in a second range of sensed capacitor charge.

6. A method as claimed in claim 5 including the step of selectively adjusting the first and second range.

7. A method as claimed in claim 6 wherein the range is selectively adjusted by the selective clamping of a current related to the sensed charge on the capacitor.

8. A method of regulating the current supplied to a capacitor comprising the steps of:
(a) controlling the current applied to a capacitor by peak current control for loads above a predetermined threshold; and
(b) controlling the current applied to the capacitor by hysteretic mode for loads below a predetermined threshold.

9. A method as claimed in claim 8 wherein the peak current control is by pulse width modulation of fixed frequency current pulses.

10. A method as claimed in claim 8 or 9 wherein a minimum of current is applied to the capacitor in the hysteretic mode.
